# EUROPÄISCHE PATENTANMELDUNG

(11) **EP 4 389 340 A1**
(43) Veröffentlichungstag der Anmeldung: **26.06.2024**
(21) Anmeldenummer: 23218664.3
(22) Anmeldetag: 20.12.2023
(51) Int. Cl.: B23K 26/064

(54) **LASERMARKIERUNGSVORRICHTUNG ZUM MARKIEREN EINES OBJEKTS UND VERFAHREN ZUM MARKIEREN EINES OBJEKTS MITTELS EINER LASERMARKIERUNGSVORRICHTUNG**

(30) Priorität: 21.12.2022 DE 102022134345
(71) Anmelder: Cab Produkttechnik Gesellschaft für Computer- und Automations-Bausteine mbH & Co. KG, 76131 Karlsruhe (DE)
(72) Erfinder: Nagel, Alexander, 76185 Karlsruhe (DE); Funck, Dr. Max, 14482 Potsdam (DE)
(74) Vertreter: Lichti - Patentanwälte Partnerschaft mbB

(57) **Zusammenfassung**

Die Erfindung betrifft eine Lasermarkierungsvorrichtung zum Markieren eines Objekts, mit einer Laserstrahlquelle (7) zum Erzeugen eines Laserstrahls und mit einer Ablenkoptik (8) zum Fokussieren des Laserstrahls auf das zu markierende Objekt. Die Ablenkoptik (8) weist insbesondere eine Fokusverschiebungsoptik (14) mit mindestens drei entlang der Strahlausbreitungsrichtung des Laserstrahls hintereinander angeordneten Fokussierelementen (3, 4, 5) auf. Das erste Fokussierelement (3) ist relativ zu dem zweiten Fokussierelement (4) und zu dem dritten Fokussierelement (5) sowie relativ zur Laserstrahlquelle (7) entlang der optischen Achse verstellbar und/oder das dritte Fokussierelement (5) ist relativ zu dem zweiten Fokussierelement (4) und zu dem ersten Fokussierelement (3) sowie relativ zur Laserstrahlquelle (7) entlang der optischen Achse verstellbar. Daneben betrifft die Erfindung ein Verfahren zum Markieren eines Objekts mittels der erfindungsgemäßen Lasermarkierungsvorrichtung (6).

## Beschreibung

Die Erfindung bezieht sich auf eine Lasermarkierungsvorrichtung zum Markieren eines Objekts und ein Verfahren zum Markieren eines Objekts mittels einer Lasermarkierungsvorrichtung.

Lasermarkierungsvorrichtungen werden in großem Umfang zum Markieren, insbesondere zum Beschriften von Objekten wie Schildern, Etiketten, Teilen, Bauteilen, Werkstücken und Produkten eingesetzt. Die Beschriftung oder Markierung besteht beispielsweise aus Klartext wie Produkt- und Herstellerinformationen, Haltbarkeitsdaten und Seriennummern, auch mit ein- und zweidimensionalen Codes (Bar-, Datamatrix, QR-Codes), sowie aus Grafiken und Logos und wird im Folgenden allgemein als Markierung bezeichnet. Zum Erzeugen der Markierung auf der zu markierenden Oberfläche des Objektes wird mittels der Lasermarkierungsvorrichtung ein Laserstahl über das Objekt bewegt. Das zu beschriftende Muster kann dabei im Vektor-, Masken- oder Rasterverfahren erzeugt werden. Die Energie des Laserstrahls kann beispielsweise durch Variation der Pulslänge oder Pulsfrequenz eingestellt werden.

Grundsätzlich kann eine Vielzahl von Materialien mit einer Lasermarkierungsvorrichtung bearbeitet werden, beispielsweise Metalle (Aluminium, (Edel-)Stahl, Kupfer, Messing, beschichtete oder unbeschichtete Metalle), Kunststoffe (PET, PCB, PVC, ABS, HDPE, PA, PC, PE, POM, PP, Folie), Gummi, Glas, Keramik, Papier, Pappe, Textilien oder organische Materialien (Holz, Obst, Gemüse).

Eine Lasermarkierungsvorrichtung umfasst üblicherweise eine Laserstrahlquelle, eine Ablenkoptik mit einem verstellbaren Spiegel, ein Planfeldobjektiv und eine Steuerung. Das Planfeldobjektiv dient zum Fokussieren des Laserstrahls auf die Oberfläche des zu markierenden Objektes, so dass eine Markierung in einer Ebene möglich ist. Um Objekte mit unterschiedlichen Höhen oder mit zu markierenden Oberflächen in unterschiedlichen axialen Entfernungen zu dem Planfeldobjektiv, mithin mit axial veränderlichen Topographien, zu markieren, war es zunächst erforderlich, den optischen Aufbau insgesamt zu verfahren, um die Fokuslage der auf das zu markierende Objekt gerichteten Laserstrahlung anzupassen. Dies bedeutete regelmäßig einen beträchtlichen Aufwand und war fehleranfällig, da durch das Verfahren des optischen Aufbaus Fehljustierungen nicht ausgeschlossen werden konnten. Die bekannten Lasermarkierungsvorrichtungen waren somit nicht für den industriellen Einsatz geeignet.

Aus dem Stand der Technik sind daher Flüssiglinsen als sogenannte Fokusshift-Optiken bekannt, die eine mechanische Verschiebung des gesamten optischen Aufbaus der Lasermarkierungsvorrichtung entbehrlich machen, indem die Brechkraft der Flüssiglinsen durch eine Veränderung ihrer geometrischen Form geändert wird. Flüssiglinsen als Fokusshift-Optiken haben jedoch den Nachteil, dass deren Integration und auch deren Ansteuerung sehr aufwändig sind. Außerdem machen sich Temperaturschwankungen bei Flüssiglinsen besonders stark bemerkbar und führen zu einer ungewollten Änderung der Fokuslage und/oder des Strahldurchmessers der auf das zu markierende Objekt gerichteten Laserstrahlung, die - einzeln und erst Recht zusammen - nur sehr aufwändig zu kompensieren sind. Die bekannten Lasermarkierungsvorrichtungen mit axial veränderlicher Fokuslage und die damit durchgeführten Verfahren sind daher ebenfalls nur bedingt für den industriellen Einsatz geeignet.

Ausgehend von diesem Stand der Technik liegt der vorliegenden Erfindung die Aufgabe zugrunde, eine Lasermarkierungsvorrichtung mit einer verbesserten industriellen Anwendbarkeit zu schaffen. Entsprechendes gilt für das Verfahren zum Markieren eines Objekts mit der Lasermarkierungsvorrichtung.

Diese Aufgabe wird erfindungsgemäß durch eine Vorrichtung mit den Merkmalen des Patentanspruchs 1 und durch ein Verfahren mit den Merkmalen des Patentanspruchs 14 gelöst. Ausgestaltungen, Weiterbildungen und Verwendungen der Erfindung ergeben sich aus den abhängigen Ansprüchen und der nachfolgenden Beschreibung mit zugehörigen Zeichnungen.

Die erfindungsgemäße Lasermarkierungsvorrichtung zum Markieren eines Objekts umfasst eine Laserstrahlquelle zum Erzeugen eines Laserstrahls und eine Ablenkoptik zum Fokussieren des Laserstrahls auf das zu markierende Objekt, wobei die Ablenkoptik eine Fokusverschiebungsoptik, eine Spiegeleinheit mit mindestens einem verstellbaren Spiegel und ein Planfeldobjektiv zum Fokussieren des Laserstrahls auf das zu markierende Objekt umfasst, wobei die Fokusverschiebungsoptik zur Veränderung der axialen Fokusposition des Laserstrahls nach dem Austritt aus dem Planfeldobjektiv ausgebildet ist, wobei die Fokusverschiebungsoptik mindestens drei entlang der Strahlausbreitungsrichtung des Laserstrahls hintereinander angeordnete Fokussierelemente aufweist, wobei das erste Fokussierelement der Laserstrahlquelle zugewandt ist und eine positive Brechkraft aufweist, wobei das dritte Fokussierelement dem Planfeldobjektiv zugewandt ist und eine positive Brechkraft aufweist, wobei das zweite Fokussierelement zwischen dem ersten Fokussierelement und dem dritten Fokussierelement angeordnet ist und eine negative Brechkraft aufweist, wobei das erste Fokussierelement relativ zu dem zweiten Fokussierelement und zu dem dritten Fokussierelement sowie relativ zur Laserstrahlquelle entlang der optischen Achse verstellbar ist und/oder das dritte Fokussierelement relativ zu dem zweiten Fokussierelement und zu dem ersten Fokussierelement sowie relativ zur Laserstrahlquelle entlang der optischen Achse verstellbar ist.

In bevorzugten Ausführungsformen der Erfindung kann vorgesehen sein, dass entweder nur das erste Fokussierelement relativ zu dem zweiten Fokussierelement und zu dem dritten Fokussierelement sowie relativ zur Laserstrahlquelle entlang der optischen Achse verstellbar ist, sodass das zweite Fokussierelement und das dritte Fokussierelement feststehend sind, oder nur das dritte Fokussierelement relativ zu dem zweiten Fokussierelement und zu dem ersten Fokussierelement sowie relativ zur Laserstrahlquelle entlang der optischen Achse verstellbar ist, sodass das erste Fokussierelement und das zweite Fokussierelement feststehend sind.

Das erfindungsgemäße Verfahren zum Markieren eines Objekts mittels der erfindungsgemäßen Lasermarkierungsvorrichtung sieht vor, dass die aus der Laserstrahlquelle austretende Laserstrahlung die Ablenkoptik durchläuft und aufgrund der Ablenkoptik auf das zu markierende Objekt fokussiert wird, um das Objekt zu markieren.

Die Erfindung berücksichtigt den Grundgedanken, dass durch eine Veränderung des Laserstrahlquerschnitts die axiale Position der Fokuslage und damit der Ort, an dem die Markierung des Objekts erfolgt, verändert werden kann. Um diese Erkenntnis für die industrielle Anwendung nutzbar zu machen, sieht die Erfindung vor, von den drei ausgebildeten Fokussierelementen der Fokusverschiebungsoptik mindestens eins der äußeren Fokussierelemente, nämlich das erste Fokussierelement und/oder das dritte Fokussierelement, zu verstellen. Dies ist, verglichen mit einer Verstellung des zweiten, mittleren Fokussierelements, konstruktiv einfach möglich, reduziert die Fehleranfälligkeit der Fokusverschiebungsoptik im Speziellen sowie der Lasermarkierungsvorrichtung im Allgemeinen und ermöglicht zudem die Ausbildung einer Fokusverschiebungsoptik mit vergleichsweise kleinen Dimensionen, so dass die industrielle Anwendbarkeit der erfindungsgemäßen Lasermarkierungsvorrichtung gegenüber den bekannten Lasermarkierungsvorrichtungen verbessert ist. Ein weiterer Vorteil der Erfindung ist, dass sich bei dem Verstellen des Fokussierelements zwar die axiale Position der Fokuslage der auf das Objekt fokussierten Laserstrahlung ändert, nicht jedoch deren laterale Ausdehnung in nennenswertem Ausmaß. Das sehr geringe Verändern des Strahldurchmessers beim Ändern der axialen Fokuslage hat dann den weiteren Vorteil, dass sich dabei beim Markieren eines Objektes auch der Strahldurchmesser auf dem Objekt nicht oder in nur sehr geringem Ausmaß ändert, wenn die Fokuslage an die Topographie oder Lage des Objektes angepasst wird. Dadurch können eine Vielzahl von unterschiedlichen Objekttopographien durch einfaches Nachführen oder Anpassen der Fokuslage an die Objekttopographie markiert werden und die Qualität der erzeugten Markierung ist gleichbleibend gut und unabhängig von der Lage der Ebene, d. h. der axialen Fokuslage, in der das Markieren des Objektes erfolgt.

Im Sinne der Erfindung umfasst das Markieren eines Objektes mittels der Lasermarkierungsvorrichtung eine Wechselwirkung der auf das Objekt auftreffenden Laserstrahlung an dessen Oberfläche und nicht eine Wechselwirkung der Laserstrahlung über große Erstreckungen senkrecht zur Oberfläche des Objekts. Insofern sind Vorrichtungen zum Laserschweißen oder Laserschneiden keine Lasermarkierungsvorrichtungen im Sinne der Erfindung. Dagegen ist das Laserbeschriften eines Objekts im Sinne der Erfindung ein Spezialfall der Lasermarkierung, so dass Laserschreibvorrichtungen zu Lasermarkierungsvorrichtungen zählen.

Vorzugsweise ist die Fokusverschiebungsoptik entlang der optischen Achse zwischen der Laserstrahlquelle und der Spiegeleinheit, mithin laserseitig der Spiegeleinheit, angeordnet, um entsprechend die Einstellung der axialen Position der Fokuslage der Laserstrahlung laserseitig vornehmen zu können. Alternativ ist es möglich, die Fokusverschiebungsoptik entlang der optischen Achse zwischen der Spiegeleinheit und dem Planfeldobjektiv, also objektseitig der Spiegeleinheit anzuordnen.

Vorzugsweise sind die auf die Fokusverschiebungsoptik einfallende Laserstrahlung und/oder die aus der Fokusverschiebungsoptik austretende Laserstrahlung kollimiert. Kollimiert im Sinne der Erfindung bezeichnet eine Laserstrahlung, deren Divergenz für die im Rahmen der Erfindung wesentlichen Strecken vernachlässigbar ist. Durch die Ausbildung von kollimierter, auf die Fokusverschiebungsoptik einfallenden Laserstrahlung kann eine Optimierung derselben, beispielsweise zur Kompensation optischer Fehler, besonders einfach erfolgen, da eben Divergenzeffekte der Laserstrahlung nicht berücksichtigt werden müssen. Entsprechendes gilt für die Ausbildung von aus der Fokusverschiebungsoptik kollimiert austretender Laserstrahlung und die objektseitige Optimierung derselben. Für den Fall, dass die auf die Fokusverschiebungsoptik einfallende als auch die aus der Fokusverschiebungsoptik austretende Laserstrahlung kollimiert sind, bewirkt die Fokusverschiebungsoptik bei verstelltem Fokussierelement mit anderen Worten eine Änderung der Strahlquerschnitts. Durch eine Anpassung des Laserstrahlquerschnitts können beispielsweise Abbildungsfehler, wie insbesondere die sphärische Aberration, zumindest teilweise kompensiert werden, was die Qualität der Markierung des Objekts verbessert. Zudem ist in diesem Fall der Aufbau der erfindungsgemäßen Lasermarkierungsvorrichtung weitgehend unempfindlich gegenüber der Distanz, die die Laserstrahlung bis zu dem zu markierenden Objekt zurücklegen muss, da wie bereits gesagt die Divergenz der Laserstrahlung nicht wesentlich berücksichtigt werden muss.

Gemäß einer vorteilhaften Weiterbildung der Erfindung wird vorgeschlagen, dass eine Kollimationseinheit ausgebildet ist, um die auf die Fokusverschiebungsoptik einfallende Laserstrahlung zu kollimieren. Die Kollimationseinheit ist insbesondere zwischen der Laserstrahlquelle und der Fokusverschiebungsoptik angeordnet, vorzugsweise unmittelbar in Strahlrichtung vor dem ersten Fokussierelement der Fokusverschiebungsoptik, und erzeugt insbesondere einen koaxialen, jedenfalls kollimierten Strahlungsverlauf auf der Eintrittsseite des ersten Fokussierelements. Das hat den Vorteil, dass sich der Fokusdurchmesser kaum ändert, wenn die Fokuslage von der Fokusverschiebungsoptik geändert wird. Wenn beispielsweise das erste Fokussierelement derart verstellt wird, dass sich sein Abstand von dem zweiten Fokussierelement (und damit auch von dem dritten Fokussierelement) vergrößert, verkleinert sich der Strahldurchmesser auf dem zweiten und dem dritten Fokussierelement und die Fokuslänge verkürzt sich, d. h. der Fokus rückt näher an das Planfeldobjektiv. Da sich dabei sowohl der Strahldurchmesser D am Ort der Fokusverschiebungsoptik als auch der Fokusabstand L verkürzen, ändert sich die numerische Apertur, die im Wesentlichen durch den Strahlungswinkel nach der Fokusverschiebungsoptik bestimmt und näherungsweise durch den Quotienten aus Strahldurchmesser und dem doppelten Fokusabstand, also D/2L, gegeben ist, nur geringfügig. Entsprechendes gilt, wenn das erste Fokussierelement in die andere Richtung verstellt wird, sowie für das Verstellen des dritten Fokussierelements. Ein weiterer Vorteil der Kollimationseinheit ergibt sich dadurch, dass damit der Abstand der Laserstrahlung von und/oder deren Winkel zu der optischen Achse verhältnismäßig klein gehalten werden können, so dass für die Dimensionierung der Lasermarkierungsvorrichtung, insbesondere der Fokusverschiebungsoptik, die Näherungen der paraxialen Optik verwendet werden können. Die Kollimationseinheit kann als Teil der Laserstrahlquelle oder als Teil der Ablenkoptik, insbesondere als Teil der Fokusverschiebungsoptik, ausgebildet sein. Die Laserstrahlquelle kann zum Erzeugen von Laserstrahlung mit einer Wellenlänge von 1064 nm ausgestaltet sein und/oder einen gepulsten Faserlaser aufweisen.

In vorteilhaften Ausführungsformen der Erfindung beträgt der Durchmesser des Laserstrahles in der Fokusverschiebungsoptik, insbesondere an den drei Fokussierelementen der Fokusverschiebungsoptik jeweils zwischen 4 mm und 15 mm, bevorzugt zwischen 5 mm und 12 mm und besonders bevorzugt zwischen 5 mm und 10 mm. Eine Weiterbildung der Erfindung kann vorsehen, dass der Strahldurchmesser innerhalb der gesamten Fokusverschiebungsoptik zwischen 4 mm und 15 mm, bevorzugt zwischen 5 mm und 12 mm und besonders bevorzugt zwischen 5 mm und 10 mm beträgt. Unter Berücksichtigung von diversen Anforderungsprofilen für die erfindungsgemäße Lasermarkierungsvorrichtung kann für die Toleranz des Strahldurchmessers innerhalb der Fokusverschiebungsoptik ein Intervall von +/- 40 % angenommen werden. Gemäß einer vorteilhaften Ausführungsform der Erfindung beträgt der Strahldurchmesser in einer Ausgangsposition der Fokusverschiebungsoptik an dem ersten Fokussierelement 7 mm, an dem zweiten Fokussierelement 6 mm und an dem dritten Fokussierelement 7 mm. Ein anderes vorteilhaftes Merkmal kann darin bestehen, dass sich der Strahldurchmesser beim Durchlaufen der Fokusverschiebungsoptik, also von dem ersten Fokussierelement zu dem zweiten Fokussierelement und/oder von dem zweiten Fokussierelement zu dem dritten Fokussierelement, um weniger als 40 %, bevorzugt um weniger als 30 % und besonders bevorzugt um weniger als 20 % ändert.

Vorzugsweise umfassen das erste Fokussierelement, das zweite Fokussierelement und/oder das dritte Fokussieelement jeweils eine Linse oder ein Linsensystem. Insbesondere bestehen das erste Fokussierelement, das zweite Fokussierelement und/oder das dritte Fokussierelement jeweils aus einer Linse. Für den Fall, das sämtliche Fokussierelemente jeweils aus einer Linse bestehen ergibt sich ein besonders platzsparender Aufbau der Fokusverschiebungsoptik und damit auch der erfindungsgemäßen Lasermarkierungsvorrichtung. Die Ausbildung eines Linsensystems ist dann vorteilhaft, wenn optische Fehler durch eine entsprechende Ausgestaltung der Fokusverschiebungsoptik kompensiert werden sollen. Das erste Fokussierelement kann eine Sammellinse, insbesondere eine Plankonvexlinse sein. Das zweite Fokussierelement kann eine Zerstreuungslinse, insbesondere eine Bikonkavlinse sein. Das dritte Fokussierelement kann eine Sammellinse, insbesondere eine Konvexplanlinse sein.

Gemäß einem weiteren vorteilhaften Merkmal kann vorgesehen sein, dass die Brennweite des ersten Fokussierelements in etwa der Brennweite des dritten Fokussierelements entspricht. In etwa bedeutet in dieser Hinsicht vorzugsweise, dass der Unterschied der Brennweiten nicht mehr als 10 %, bevorzugt nicht mehr als 5 %, weiter bevorzugt nicht mehr als 4 % und besonders bevorzugt nicht mehr als 3 % beträgt. In etwa in dieser Hinsicht kann vorzugsweise auch bedeuten, dass der Unterschied der Brennweiten nicht mehr als 10 mm, bevorzugt nicht mehr als 5 mm, weiter bevorzugt nicht mehr als 4 mm und besonders bevorzugt nicht mehr als 3 mm beträgt. Entsprechende Zusammenhänge können für die Brechkräfte der Fokussierelemente gelten, die jeweils dem Kehrwert der Brennweiten der Fokussierelemente entsprechen. Insofern entspricht vorzugsweise die Brechkraft des ersten Fokussierelements der Brechkraft des dritten Fokussierelements.

Es kann vorgesehen sein, dass, bei verstellbarem ersten Fokussierelement die Summe der Brennweiten des zweiten und dritten Fokussierelements kleiner oder größer als Null ist und/oder bei verstellbarem dritten Fokussierelement die Summe der Brennweiten des ersten und zweiten Fokussierelements kleiner oder größer als Null ist. Es kann vorgesehen sein, dass, bei verstellbarem ersten Fokussierelement die Summe der Brechkräfte des zweiten und dritten Fokussierelements kleiner als Null ist und/oder bei verstellbarem dritten Fokussierelement die Summe der Brechkräfte des ersten und zweiten Fokussierelements kleiner als Null ist, wobei der Wert Null streng genommen einem Wert von 0/mm entspricht.

Ein weiteres vorteilhaftes Merkmal kann sein, dass die Summe der Brennweiten der ersten, zweiten und dritten Fokussierelemente in etwa Null ist. In etwa bedeutet in dieser Hinsicht vorzugsweise, dass die Abweichung von Null nicht mehr als 40 %, bevorzugt nicht mehr als 30 %, weiter bevorzugt nicht mehr als 20 % und besonders bevorzugt nicht mehr als 15 % der Brennweite des ersten Fokussierelements und/oder des zweiten Fokussierelements beträgt. In etwa in dieser Hinsicht kann vorzugsweise auch bedeuten, dass die Abweichung von Null nicht mehr als 10 mm, bevorzugt nicht mehr als 5 mm, weiter bevorzugt nicht mehr als 4 mm und besonders bevorzugt nicht mehr als 3 mm beträgt. Gemäß einer besonders vorteilhaften Ausführungsform wird vorgeschlagen, dass sowohl die Brennweite des ersten Fokussierelements in etwa der Brennweite des dritten Fokussierelements entspricht als auch, dass die Summe der Brennweiten des ersten, zweiten und dritten Fokussierelements in etwa Null ist.

Ein weiteres vorteilhaftes Merkmal kann sein, dass die Summe der Brechkräfte der ersten, zweiten und dritten Fokussierelemente in etwa Null ist, insbesondere unter Beibehaltung der Proportion zwischen Brennweiten und Abstände. In etwa bedeutet in dieser Hinsicht vorzugsweise, dass die Abweichung von Null nicht mehr als 40 %, bevorzugt nicht mehr als 30 %, weiter bevorzugt nicht mehr als 20 % und besonders bevorzugt nicht mehr als 15 % der Brechkraft des ersten Fokussierelements und/oder des zweiten Fokussierelements beträgt. In etwa in dieser Hinsicht kann vorzugsweise auch bedeuten, dass die Abweichung von Null nicht mehr als 1/3 mm, bevorzugt nicht mehr als 1/4 mm, weiter bevorzugt nicht mehr als 1/5 mm und besonders bevorzugt nicht mehr als 1/10 mm beträgt. Gemäß einer besonders vorteilhaften Ausführungsform wird vorgeschlagen, dass sowohl die Brechkraft des ersten Fokussierelements in etwa der Brechkraft des dritten Fokussierelements entspricht als auch, dass die Summe der Brechkräfte des ersten, zweiten und dritten Fokussierelements in etwa Null ist. Für den Fall, dass die Summe der Brechkräfte der Fokussierelemente der Fokusverschiebungsoptik im Wesentlichen gleich Null sind, weist die Fokusverschiebungsoptik keine konvergierende und auch keine divergierende Wirkung auf die einfallende Laserstrahlung auf. Eine koaxial einfallende Laserstrahlung wird daher aus der Fokusverschiebungsoptik als koaxiale Laserstrahlung austreten. Die Absolutwerte (Beträge) der Brennweiten des ersten, zweiten und dritten Fokussierelements liegen vorzugsweise zwischen 15 mm und 180 mm, bevorzugt zwischen 20 mm und 120 mm und besonders bevorzugt zwischen 30 mm und 75 mm. Gemäß einer vorteilhaften Ausführungsform ist die Brennweite des ersten Fokussierelements 70 mm, des zweiten Fokussierelements -30 mm und die des dritten Fokussierelements 70 mm, wobei insbesondere für diese Werte eine Toleranz von +/- 40 % anzunehmen ist.

Zum Einstellen der axialen Position der Fokuslage der auf das Objekt fokussierten Laserstrahlung ist es vorteilhaft, wenn die Fokusverschiebungsoptik zum Verstellen des ersten Fokussierelements und/oder des dritten Fokussierelements eine axiale Verstelleinrichtung aufweist, um das Fokussierelement gezielt und reproduzierbar zu verstellen. Insbesondere kann die axiale Verstelleinrichtung einen Motor, vorzugsweise einen Schrittmotor, mit dazugehöriger Spindel oder einen Linearantrieb umfassen.

Vorzugsweise weist die Lasermarkierungsvorrichtung eine Positionsmesseinrichtung zum Bestimmen der Position des verstellbaren Fokussierelements, insbesondere der Position relativ zum zweiten Fokussierelement, auf, wobei die Positionsmesseinrichtung insbesondere als Teil der Fokusverschiebungsoptik ausgebildet ist. Auf diese Weise ist die jeweils aktuelle Position des verstellbaren Fokussierelements schnell und einfach bestimmbar und kann für die weitere Verstellung des Fokussierelements verwendet werden. Vorzugsweise weist die Lasermarkierungsvorrichtung einen Abstandssensor zum Bestimmen des Abstandes zwischen dem Planfeldobjektiv und dem zu markierenden Objekt auf, so dass sich verändernde Oberflächentopographien der Objekte schnell erkannt werden und eine hierauf abgestimmte Verstellung des Fokussierelements erfolgen kann, um die axiale Position der Fokuslage der auf das Objekt fokussierten Laserstrahlung auf die veränderliche Oberflächentopographie des Objekts anzupassen. Insbesondere ist der Abstandssensor mit der axialen Verstelleinrichtung zum Einstellen der Fokusverschiebungsoptik, mithin zum Verstellen des Fokussierelements, verbunden.

Gemäß einem vorteilhaften Merkmal wird vorgeschlagen, dass die in Entfernung entlang der optischen Achse zwischen den feststehenden Fokussierelementen zwischen 10 mm und 30 mm, bevorzugt zwischen 15 mm und 25 mm beträgt. Gemäß einer vorteilhaften Ausführungsform beträgt dieser Abstand 12 mm. Die Fokusverschiebungsoptik der erfindungsgemäßen Lasermarkierungsvorrichtung hat eine wesentlich geringere axiale Baulänge als andere bekannte Vorrichtungen zu dem gleichen Zweck und hat darüber hinaus den Vorteil, dass auch bereits bestehende Lasermarkierungsvorrichtungen mit der Fokusverschiebungsoptik nachgerüstet werden können, beispielsweise durch das Einbauen eines entsprechenden Moduls, das die Fokusverschiebungsoptik umfasst.

Gemäß einem anderen vorteilhaften Merkmal kann vorgesehen sein, dass die variable Entfernung entlang der optischen Achse zwischen dem verstellbaren Fokussierelement und dem zweiten Fokussierelement zwischen 5 mm und 30 mm, bevorzugt zwischen 10 mm und 20 mm beträgt. In vorteilhaften Ausführungsformen ist in einer Ausgangsposition der Fokusverschiebungsoptik der Abstand zwischen dem verstellbaren Fokussierelement und dem zweiten Fokussierelement so groß wie der Abstand zwischen den feststehenden Fokussierelementen. Gemäß einer vorteilhaften Ausführungsform beträgt dieser Abstand in einer Ausgangsposition der Fokusverschiebungsoptik 12 mm, wobei insbesondere für die Abstände eine Toleranz von +/- 40 % angenommen werden kann.

Vorzugsweise sind das erste, und/oder das zweite und/oder das dritte Fokussierelement stets senkrecht zur optischen Achse ausgerichtet; besonders vorzugsweise sind das erste, das zweite und das dritte Fokussierelement stets senkrecht zur optischen Achse ausgerichtet. Da dadurch Verkippungen der Fokussierelemente relativ zur optischen Achse vermieden werden, ergibt sich ein einfacher Strahlverlauf innerhalb der Fokusverschiebungsoptik, was die Robustheit der erfindungsgemäßen Lasermarkierungsvorrichtung erhöht.

Die Entfernung entlang der optischen Achse zwischen dem ersten Fokussierelement und dem dritten Fokussierelement, die beispielsweise der Entfernung zwischen den jeweils dem zweiten Fokussierelement abgewandten Seiten des ersten Fokussierelements und des dritten Fokussierelements entspricht, insbesondere, falls vorhanden, von deren Scheitelpunkten, kann zwischen 25 mm und 50 mm, bevorzugt zwischen 30 mm und 40 mm, besonders bevorzugt zwischen 18 mm und 30 mm, insbesondere in etwa 20 mm betragen. Für sämtliche Werte für die Abstände der Fokussierelemente kann jeweils eine Toleranz von +/- 40 % angenommen werden. Die Fokusverschiebungsoptik der erfindungsgemäßen Lasermarkierungsvorrichtung weist insbesondere eine axiale Ausdehnung zwischen 30 mm und 100 mm auf.

Vorzugsweise weist die Spiegeleinheit genau einen verstellbaren Spiegel auf. Alternativ oder zusätzlich kann vorgesehen sein, dass der mindestens eine Spiegel um mindestens eine, insbesondere um zwei Achsen rotierbar ist, wobei die Achsen jeweils senkrecht zueinander und jeweils senkrecht zur optischen Achse angeordnet sein können. Die Spiegeleinheit ist im Sinne der Erfindung zur Ablenkung des Laserstrahls auf die Planfeldoptik vorgesehen, wobei durch eine Verstellung des mindestens einen Spiegels eine entsprechende Bewegung des Laserstrahls in der Fokusebene der Planfeldoptik möglich ist, um das zu markierende Objekt insbesondere flächig zu markieren. Zu diesem Zweck kann der mindestens eine Spiegel durch einen Servomotor ansteuerbar sein.

Verfahrensmäßig kann vorgesehen sein, dass die Position des verstellbaren Fokussierelements in Abhängigkeit von der Entfernung entlang der optischen Achse zwischen dem Planfeldobjektiv und dem zu markierenden Objekt eingestellt wird, so dass die axiale Position der Fokuslage, auch bei veränderlicher Objekttopographie, insbesondere stets am gewünschten Ort der Oberfläche des Objektes bleibt. Hierdurch ist ein einfaches Markieren eines Objekts mit veränderlicher Oberflächentopographie möglich.

Weitere Vorteile und Merkmale der Erfindung ergeben sich aus den Ansprüchen und der nachfolgenden Beschreibung, in der Ausführungsbeispiele der Erfindung unter Bezugnahme auf die Zeichnungen im Einzelnen erläutert sind. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den Figuren mit denselben Bezugszeichen bezeichnet und gewöhnlich nur einmal beschrieben, auch wenn sie bei anderen Ausführungsformen vorteilhaft eingesetzt werden können. Es zeigen:
- Fig. 1: eine schematische Veranschaulichung einer Fokusverschiebungsoptik einer erfindungsgemäßen Lasermarkierungsvorrichtung,
- Fig. 2: eine schematische Ansicht der erfindungsgemäßen Lasermarkierungsvorrichtung,
- Fig. 3: die Lasermarkierungsvorrichtung von Fig. 2 mit einer geänderten Einstellung der Fokusverschiebungsoptik,
- Fig. 4: die Fokusverschiebungsoptik der Lasermarkierungsvorrichtung von Fig. 3 in vergrößerter Ansicht und
- Fig. 5: einen schematischen Schnitt durch die Fokusverschiebungsoptik der Fig. 4.

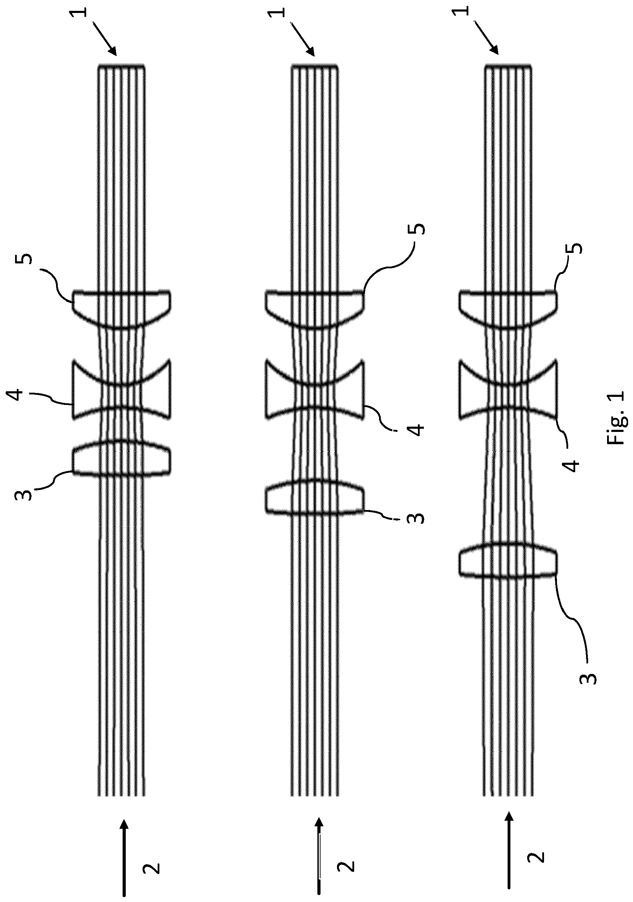

Die Fig. 1 veranschaulicht schematisch den grundsätzlichen Aufbau und den Strahlengang der Fokusverschiebungsoptik 1 mit drei hintereinander angeordneten Fokussierelementen 3, 4, 5 zum Ändern der Fokuslage eines Laserstrahls einer erfindungsgemäßen Lasermarkierungsvorrichtung 6 in drei verschiedenen Einstellpositionen der Fokusverschiebungsoptik 1.

Die Fokussierelemente 3, 4, 5 sind in der Strahlausbreitungsrichtung 2 des Laserstrahls, mithin entlang der optischen Achse, hintereinander angeordnet und jeweils als einzelne Linsen ausgebildet, nämlich eine in Strahlausbreitungsrichtung 2 erste Linse 3, eine in Strahlausbreitungsrichtung 2 darauf folgende zweite Linse 4 und eine in Strahlausbreitungsrichtung 2 darauf folgende dritte Linse 5. Die erste Linse 3 ist eine Sammellinse mit positiver Brennweite, in Fig. 1 eine Plankonvexlinse, die zweite Linse 4 ist eine Zerstreuungslinse mit negativer Brennweite, in Fig. 1 eine Bikonkavlinse, und die dritte Linse 5 ist eine Sammellinse mit positiver Brennweite, in Fig. 1 eine Konvexplanlinse.

Die Fokusverschiebungsoptik 1 umfasst eine Verstelleinrichtung, mittels der die erste Linse 3 und/oder die dritte Linse 5 entlang der Strahlausbreitungsrichtung 2 des Laserstrahls verstellbar sind. Die beiden anderen Linsen 4, 5 (oder 3, 4) sind insbesondere relativ zueinander und relativ zu der Laserstrahlquelle 7 feststehend. In dem in Fig. 1 dargestellten Ausführungsbeispiel ist nur die erste Linse 3 entlang der optischen Achse, also linear, verstellbar und die zweite Linse 4 und die dritte Linse 5 sind feststehend. In anderen Ausführungsformen können beispielsweise die erste Linse 3 und die zweite Linse 4 feststehend und die dritte Linse 5 entlang der optischen Achse verfahrbar sein. In einer Weiterbildung der Erfindung sind die Linsen 3, 4, 5 trotz deren Verstellbarkeit stets senkrecht zur optischen Achse ausgerichtet.

Im gezeigten Ausführungsbeispiel der Fig. 1 tritt kollimierte Laserstrahlung in die Fokusverschiebungsoptik 1 ein und auch wieder aus dieser aus. Aus den Darstellungen der Fig. 1, die verschiedene Positionen der ersten Linse 3 entlang der optischen Achse zeigen, geht hervor, dass durch das Verstellen der ersten Linse 3 entlang der optischen Achse eine Verringerung der lateralen Ausdehnung der aus der Fokusverschiebungsoptik 1 austretenden Laserstrahlung erfolgt. Dadurch, dass im gezeigten Ausführungsbeispiel der Fig. 1 die Summe der Brechkräfte der Linsen 3, 4, 5 Null beträgt, erfolgt keine nennenswerte Änderung der Divergenz der aus der Fokusverschiebungsoptik 1 austretenden Laserstrahlung. Die Brechkraft der ersten Linse 3 entspricht im Wesentlichen der Brechkraft der dritten Linse 5. Die obere Darstellung der Fig. 1 zeigt die erste Linse 3 in minimalem Abstand zur zweiten Linse 4, die untere Darstellung die Linsen 3 in maximalem Abstand zur zweiten Linse 3.

In diesem Ausführungsbeispiel beträgt die Brennweite der ersten Linse 3 70 mm, der zweiten Linse 4 -30 mm und der dritten Linse 5 70 mm. Die Brechkraft der ersten Linse 3 entspricht damit der Brechkraft der dritten Linse 5 und die Summe der Brechkräfte der Linsen 3, 4, 5 beträgt in etwa 0/mm.

In der Ausgangsposition der Fokusverschiebungsoptik 1 beträgt der Abstand zwischen der ersten Linse 3 und der dritten Linse 5 20 mm. In der Ausgangsposition der Fokusverschiebungsoptik 1 beträgt der Strahldurchmesser an der ersten Linse 3 7 mm, an der zweiten Linse 4 6 mm und an der dritten Linse 5 7 mm.

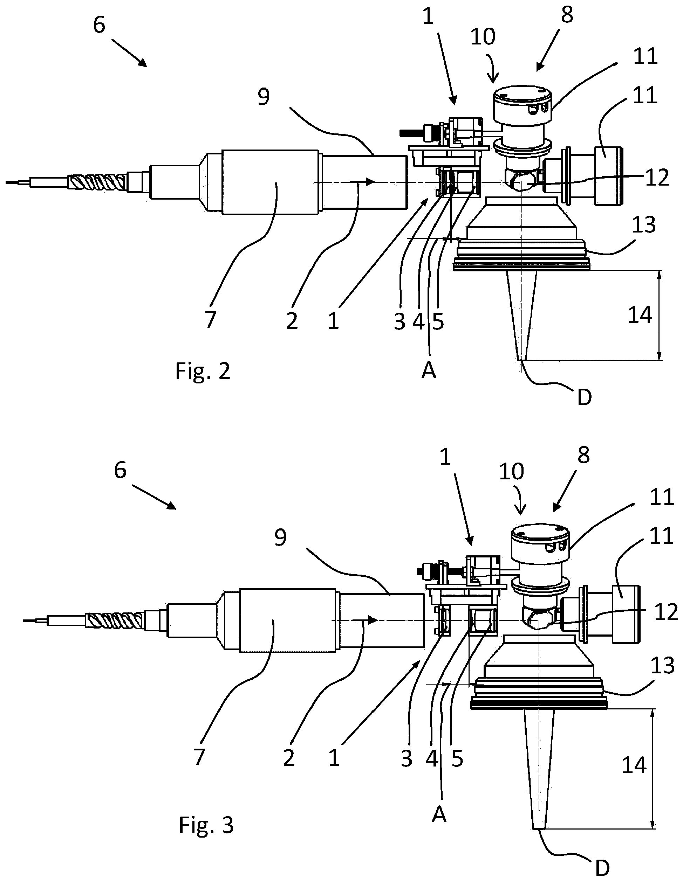

Die erfindungsgemäße Lasermarkierungsvorrichtung 6 zum Markieren von Objekten, die im gezeigten Ausführungsbeispiel gemäß Fig. 2 als Laserschreibvorrichtung ausgebildet ist, umfasst eine Laserstrahlquelle 7 zum Erzeugen eines Laserstrahls und eine Ablenkoptik 8 zum Fokussieren des Laserstrahls auf die zu markierende Oberfläche eines Objektes. Die Laserstrahlquelle 7 umfasst einen gepulsten Faserlaser, der Laserstrahlung mit einer Wellenlänge von 1064 nm emittiert. Eine Kollimationseinheit 9 kollimiert die aus dem Faserlaser divergent austretende Laserstrahlung. Die Ablenkoptik 8 ist in Strahlausbreitungsrichtung 2, mithin entlang der optischen Achse, strahlabwärts der Laserstrahlquelle 7 angeordnet und weist, neben der bereits erörterten Fokusverschiebungsoptik 1 gemäß Fig. 1, eine Spiegeleinheit 10 mit mittels einer Servomotoreinheit 11 um zwei zueinander senkrecht angeordnete Achsen verstellbaren Spiegel 11 auf. Die Ablenkoptik 8 weist weiterhin, strahlabwärts des Spiegels 11, ein Planfeldobjektiv 12 zur Fokussierung der Laserstrahlung auf das zu markierende Objekt auf. Die erfindungsgemäße Lasermarkierungsvorrichtung 6 ist in der Lage, Objekte mit unterschiedlichen Höhen und/oder mit veränderlicher Oberflächentopographie zu markieren. Die Fokusverschiebungsoptik 1 ist entlang der optischen Achse zwischen der Laserstrahlquelle 7 und der Spiegeleinheit 10 mit dem verstellbaren Spiegel 11 angeordnet.

Die Fokusverschiebungsoptik 1 weist weiterhin Verstell-, Befestigungs- und gegebenenfalls Messeinrichtungen auf und ist als Modul zusammengefasst, das insbesondere als modulare Komponente in eine bereits vorhandene Lasermarkierungsvorrichtung 6 nachträglich eingebaut und somit nachgerüstet werden kann.

In der Fig. 2 befindet sich die erste Linse 3 der Fokusverschiebungsoptik 1 entsprechend der oberen Darstellung der Fig. 1 in einem minimalen Abstand A zu der zweiten Linse 4. Aus Fig. 1 geht hervor, dass die laterale Ausdehnung der aus der Fokusverschiebungsoptik 1 austretenden, kollimierten Laserstrahlung gegenüber der auf diese einfallenden, kollimierten Laserstrahlung vergrößert ist. Dies bewirkt nach der Fokussierung der Laserstrahlung durch das Planfeldobjektiv 13 eine vergleichsweise kurze axiale Fokuslage 14, also einen geringen axialen Abstand der Fokuslage zum Planfeldobjektiv 13.

Die Fig. 3 zeigt die Lasermarkierungsvorrichtung 1 der Fig. 2 mit einer geänderten Einstellung der Fokusverschiebungsoptik 1, in der sich die erste Linse 3 entsprechend der unteren Darstellung der Fig. 1 in einem maximalen Abstand A zu der zweiten Linse 4 befindet. Die axiale Fokuslage 14 ist hierbei größer als in Fig. 2. Ferner ist in Fig. 3 auch, zur Verdeutlichung übertrieben, dargestellt, dass sich in Fig. 3 im Vergleich zu der Einstellung der Fokusverschiebungsoptik 1 von Fig. 2 der Fokusdurchmesser D des Laserstrahls auf dem zu beschriftenden oder zu markierenden Objekt geringfügig vergrößert hat. Aufgrund der optischen Eigenschaften des Planfeldobjektivs 13 werden diese Eigenschaften der Fokuslage 14 auch bei einer flächigen Bewegung des fokussierten Laserstrahls über die zu markierende Oberfläche des Objekts beibehalten. Bei der Erfindung ist bei einer Änderung der Fokuslage 14 die damit einhergehende Änderung des Strahldurchmessers im Planfeldobjektiv 13 vergleichsweise klein, insbesondere gegenüber bekannten Vorrichtungen aus dem Stand der Technik. Dadurch ändert sich beim Lasermarkieren der Fokusdurchmesser D weniger, wenn die axiale Position des Fokus verändert wird. Dies hat wesentliche Vorteile gegenüber der bekannten Verwendung einer Flüssiglinse oder einer Fokusverschiebungsoptik mit nur zwei Fokussierelementen.

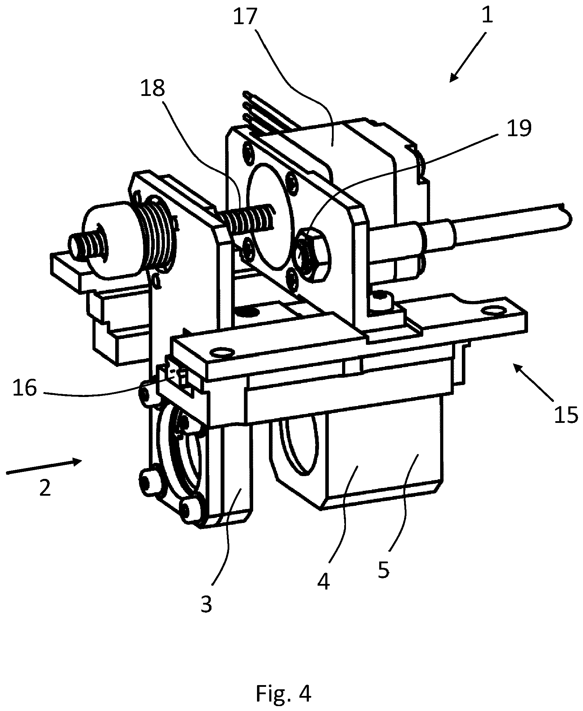

Die Fig. 4 zeigt in einer schematischen, perspektivischen Ansicht ein Ausführungsbeispiel der Fokusverschiebungsoptik 1 der Lasermarkierungsvorrichtung 6 von Fig. 3. Die zweite Linse 4 und die dritte Linse 5 sind wie bereits gesagt feststehend und die erste Linse 3 ist zum dynamischen Ändern der Fokuslage 14 mittels einer Verstelleinrichtung 15 kontinuierlich entlang der Strahlausbreitungsrichtung 2, mithin entlang der optischen Achse, einstellbar verfahrbar. Als Verstelleinrichtung 15 für die erste Linse 3 dient im Ausführungsbeispiel der Fig. 4 eine Linearführung 16, auf der die erste Linse 3 bewegt wird, und ihr Antrieb erfolgt im gezeigten Ausführungsbeispiel über einen Schritt- oder Antriebsmotor 17 mittels Spindelantrieb 18. Dadurch kann die Fokuslage 14 des Laserstrahls verändert werden, um verschiedene Markierungs- oder Beschriftungspositionen in der Strahlausbreitungsrichtung 2 zu realisieren, ohne eine mechanische Achse zu bewegen. Alternativ kann anstelle des Motors 17 mit Spindelantrieb 18 beispielsweise auch ein Linearmotor verwendet werden. Gemäß den Fig. 2 und Fig. 3 kann die Verstelleinrichtung 15 mit der Servomotoreinheit 11 verbunden sein.

Die Position der verfahrbaren ersten Linse 3 kann beispielsweise mittels eines Sensors 19 bestimmt werden. Das kann beispielsweise ein kapazitiver Näherungsschalter (für eine Referenzfahrt bzw. Referenzposition) sein. Alternativ kann beispielsweise ein Absolutmesssystem verwendet werden; das macht die Referenzierung überflüssig und bietet die Möglichkeit zur Positionserfassung und Fehlerauswertung. Im gezeigten Ausführungsbeispiel ist die Fokusverschiebungsoptik 1 mit den drei Linsen 3, 4, 5, mit der Verstelleinrichtung 15 mit dem Motor 17 und dem Spindelantrieb 18 sowie mit dem Sensor 19 sind zu Modul zusammengefasst.

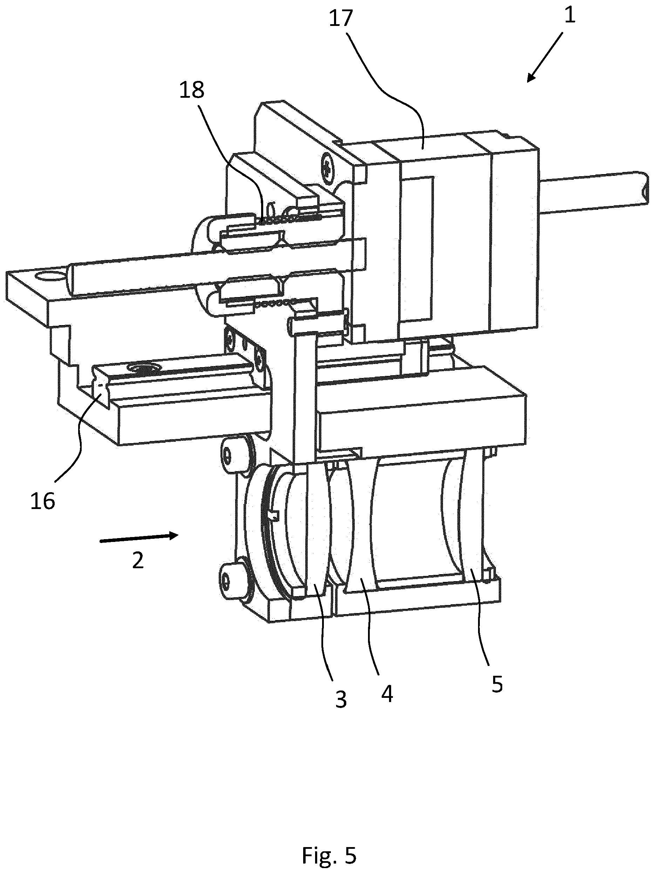

Die Fig. 5 zeigt eine vertikal geschnittene perspektivische Ansicht zur Fokusverschiebungsoptik 1 der Fig. 4. Dabei befindet sich im Unterschied zu Fig. 4 die erste Linse 3 nicht in einem maximalen Abstand A zu der zweiten Linse 4, sondern entsprechend der Fig. 2 und der oberen Darstellung der Fig. 1 in einem minimalen Abstand A.

## Patentansprüche

1. Lasermarkierungsvorrichtung (6) zum Markieren eines Objekts, mit einer Laserstrahlquelle (7) zum Erzeugen eines Laserstrahls und mit einer Ablenkoptik (8) zum Fokussieren des Laserstrahls auf das zu markierende Objekt,
wobei die Ablenkoptik (8) eine Fokusverschiebungsoptik (1), eine Spiegeleinheit (10) mit mindestens einem verstellbaren Spiegel (12) und ein Planfeldobjektiv (13) zum Fokussieren des Laserstrahls auf das zu markierende Objekt umfasst,
wobei die Fokusverschiebungsoptik (1) zur Veränderung der axialen Fokusposition des Laserstrahls nach dem Austritt aus dem Planfeldobjektiv (12) ausgebildet ist,
wobei die Fokusverschiebungsoptik (1) mindestens drei entlang der Strahlausbreitungsrichtung (2) des Laserstrahls hintereinander angeordnete Fokussierelemente (3, 4, 5) aufweist,
wobei das erste Fokussierelement (3) der Laserstrahlquelle (7) zugewandt ist und eine positive Brechkraft aufweist,
wobei das dritte Fokussierelement (5) dem Planfeldobjektiv (12) zugewandt ist und eine positive Brechkraft aufweist,
wobei das zweite Fokussierelement (4) zwischen dem ersten Fokussierelement (3) und dem dritten Fokussierelement (5) angeordnet ist und eine negative Brechkraft aufweist,
wobei das erste Fokussierelement (3) relativ zu dem zweiten Fokussierelement (4) und zu dem dritten Fokussierelement (5) sowie relativ zur Laserstrahlquelle (7) entlang der optischen Achse verstellbar ist und/oder das dritte Fokussierelement (5) relativ zu dem zweiten Fokussierelement (4) und zu dem ersten Fokussierelement (3) sowie relativ zur Laserstrahlquelle (7) entlang der optischen Achse verstellbar ist.

2. Lasermarkierungsvorrichtung (6) nach Anspruch 1, **dadurch gekennzeichnet, dass** die Fokusverschiebungsoptik (1) entlang der optischen Achse zwischen der Laserstrahlquelle (7) und der Spiegeleinheit (10) angeordnet ist.

3. Lasermarkierungsvorrichtung (6) nach einem der Ansprüche 1 oder 2, **dadurch gekennzeichnet, dass** die auf die Fokusverschiebungsoptik (1) einfallende Laserstrahlung und/oder die aus der Fokusverschiebungsoptik (1) austretende Laserstrahlung kollimiert sind, wobei insbesondere eine Kollimationseinheit (9) vorgesehen ist, um die auf die Fokusverschiebungsoptik (8) einfallende Laserstrahlung zu kollimieren.

4. Lasermarkierungsvorrichtung (6) nach einem der vorhergehenden Ansprüche, **dadurch gekennzeichnet, dass** das erste Fokussierelement (3), das zweite Fokussierelement (4) und/oder das dritte Fokussierelement (5) jeweils eine Linse oder ein Linsensystem umfassen.

5. Lasermarkierungsvorrichtung (6) nach einem der vorhergehenden Ansprüche, **dadurch gekennzeichnet, dass** die Brennweite des ersten Fokussierelements (3) in etwa der Brennweite des dritten Fokussierelements (5) entspricht, wobei vorzugsweise der Unterschied der Brennweiten nicht mehr als 10 %, bevorzugt nicht mehr als 5 %, weiter bevorzugt nicht mehr als 4 % und besonders bevorzugt nicht mehr als 3 % beträgt oder vorzugsweise der Unterschied der Brennweiten nicht mehr als 10 mm, bevorzugt nicht mehr als 5 mm, weiter bevorzugt nicht mehr als 4 mm und besonders bevorzugt nicht mehr als 3 mm beträgt.

6. Lasermarkierungsvorrichtung (6) nach einem der vorhergehenden Ansprüche, **dadurch gekennzeichnet, dass** die Summe der Brechkräfte der ersten, zweiten und dritten Fokussierelemente (3, 4, 5) in etwa Null ist, wobei vorzugsweise die Abweichung von Null nicht mehr als 40 %, bevorzugt nicht mehr als 30 %, weiter bevorzugt nicht mehr als 20 % und besonders bevorzugt nicht mehr als 15 % der Brechkraft des ersten Fokussierelements (3) und/oder des zweiten Fokussierelements (5) beträgt oder vorzugsweise die Abweichung von Null nicht mehr als 1/3 mm, bevorzugt nicht mehr als 1/4 mm, weiter bevorzugt nicht mehr als 1/5 mm und besonders bevorzugt nicht mehr als 1/10 mm beträgt.

7. Lasermarkierungsvorrichtung (6) nach einem der vorhergehenden Ansprüche, **dadurch gekennzeichnet, dass** die Fokusverschiebungsoptik (1) zum Verstellen des ersten Fokussierelements (3) und/oder des dritten Fokussierelements (5) eine axiale Verstelleinrichtung (15) aufweist, die insbesondere einen Motor (17) mit dazugehöriger Spindel (18) oder einen Linearantrieb umfasst.

8. Lasermarkierungsvorrichtung (6) nach einem der vorhergehenden Ansprüche, **gekennzeichnet durch** eine Positionsmesseinrichtung (19) zum Bestimmen der Position des verstellbaren Fokussierelements (3, 5), insbesondere dessen Position relativ zum zweiten Fokussierelement (4), wobei die Positionsmesseinrichtung insbesondere als Teil der Fokusverschiebungsoptik (1) ausgebildet ist.

9. Lasermarkierungsvorrichtung (6) nach einem der vorhergehenden Ansprüche, **gekennzeichnet durch** einen Abstandssensor zum Bestimmen des Abstandes zwischen dem Planfeldobjektiv (13) und dem zu markierenden Objekt, wobei insbesondere der Abstandssensor mit der axialen Verstelleinrichtung (15) zum Einstellen der Fokusverschiebungsoptik (1) verbunden ist.

10. Lasermarkierungsvorrichtung (6) nach einem der vorhergehenden Ansprüche, **dadurch gekennzeichnet, dass** die Entfernung entlang der optischen Achse zwischen den feststehenden Fokussierelementen (4, 5 oder 3, 4) zwischen 10 mm und 30 mm, bevorzugt zwischen 15 mm und 25 mm beträgt.

11. Lasermarkierungsvorrichtung (6) nach einem der vorhergehenden Ansprüche, **dadurch gekennzeichnet, dass** die variable Entfernung entlang der optischen Achse zwischen dem verstellbaren Fokussierelement (3, 5) und dem zweiten Fokussierelement (4) zwischen 5 mm und 30 mm, bevorzugt zwischen 10 mm und 20 mm beträgt.

12. Lasermarkierungsvorrichtung (6) nach einem der vorhergehenden Ansprüche, **dadurch gekennzeichnet, dass** die Entfernung entlang der optischen Achse zwischen dem ersten Fokussierelement (3) und dem dritten Fokussierelement (5) zwischen 25 mm und 50 mm, bevorzugt zwischen 30 mm und 40 mm beträgt.

13. Lasermarkierungsvorrichtung (6) nach einem der vorhergehenden Ansprüche, **dadurch gekennzeichnet, dass** die Spiegeleinheit (10) genau einen verstellbaren Spiegel (12) aufweist, und/oder dass der mindestens eine Spiegel (12) um mindestens eine, insbesondere um zwei Achsen rotierbar ist.

14. Verfahren zum Markieren eines Objekts mittels einer Lasermarkierungsvorrichtung (6) nach einem der Ansprüche 1 bis 13, **dadurch gekennzeichnet, dass** die aus der Laserstrahlquelle (7) austretende Laserstrahlung die Ablenkoptik (8) durchläuft und aufgrund der Ablenkoptik (8) auf das zu markierende Objekt fokussiert wird, um das Objekt zu markieren.

15. Verfahren nach Anspruch 14, **dadurch gekennzeichnet, dass** die Position des verstellbaren Fokussierelements (3, 5) in Abhängigkeit von der Entfernung entlang der optischen Achse zwischen dem Planfeldobjektiv (12) und dem zu markierenden Objekt eingestellt wird.
